# EUROPÄISCHE PATENTSCHRIFT

(11) **EP 1 289 894 B1**
(45) Veröffentlichungstag und Bekanntmachung des Hinweises auf die Patenterteilung: **21.12.2005**
(21) Anmeldenummer: 01940537.2
(22) Anmeldetag: 28.05.2001
(51) Int. Cl.: C03B 9/353, C03B 9/18

(54) **BLASFORM UND VERFAHREN ZUM VERSTELLEN EINER BLASFORM**
BLOW MOLD AND METHOD FOR ADJUSTING A BLOW MOLD
MOULE DE SOUFFLAGE ET SON PROCEDE DE REGLAGE

(30) Priorität: 31.05.2000 DE 10027111
(43) Veröffentlichungstag der Anmeldung: 12.03.2003
(73) Patentinhaber: Kronseder, Hermann, Dr.-Ing. E.h., 93086 Wörth/Donau (DE)
(72) Erfinder: Kronseder, Hermann, Dr.-Ing. E.h., 93086 Wörth/Donau (DE)
(74) Vertreter: Grünecker, Kinkeldey, Stockmair & Schwanhäusser Anwaltssozietät
(86) Internationale Anmeldenummer: PCT/EP2001/006080
(87) Internationale Veröffentlichungsnummer: WO 2001/092168

(56) Entgegenhaltungen:
- FR-A- 610 156
- GB-A- 120 416

## Beschreibung

Die Erfindung betrifft eine Blasform gemäß Oberbegriff des Anspruchs 1 und ein Verfahren gemäß Oberbegriff des Anspruchs 12.

Bei der aus GB-A-120 416 bekannten Blasform ist die Schließklammer Teil der Verschlusseinrichtung der Formhälften und eine Zuhalteeinrichtung. Die freien Schließklammer-Enden sind weiter voneinander entfernt, als es dem Außenmaß der Formhälften in der Schließstellung entspricht. In jedem Schließklammer-Ende ist ein zur Formhälften-Achse paralleler Stift drehbar gelagert, in den quer durchgehend eine Schraubspindel eingesetzt ist. Das innenliegende Ende der Schraubspindel ist auf einem Zapfen gelagert, der in einem Lagerbock an der Außenseite der Formhälfte schwenkbar gehalten wird. Auf diese Weise werden zwei Kniehebel-Mechanismen gebildet, mit denen die Formhälften beim Verschieben der Schließklammer zueinander geschwenkt und in der Schließstellung gegeneinander gedrückt werden. Die Kniehebel-Mechanismen sind vielteilig und bilden je zwei hoch belastete Schwenkstellen pro Formhälfte. Ferner beansprucht die Schließklammer mit den Kniehebel-Mechanismen relativ viel Platz in Querrichtung.

Bei der aus DE 694 23 484 T2 bekannten Blasform sind zwei zangenartig an der Verbindungsachse angelenkte Arme vorgesehen, deren jeder drei nebeneinanderliegende Formhälften trägt. Die beiden Arme werden durch eine Verschlusseinrichtung bildende Kniehebelantriebe zueinander geschwenkt, bis die Formhälften die Schließstellung erreicht haben. An den der Verbindungsachse gegenüberliegenden Enden der Arme sind Widerlagerflächen vorgesehen, auf die eine C-förmige Schließklammer in Richtung zur Verbindungsachse aufgeschoben wird. Für diese Manipulation sind die Kniehebelantriebe als Verschlusseinrichtung und die Schließklammer als Schließstellungsabstützung erforderlich. Die Haltekraft der Schließklammer wird auf jedes Formhälftenpaar mittelbar über die Arme und mit relativ großem Hebelarm zur Verbindungsachse übertragen, die somit einen Teil der Reaktionskräfte des Blasdrucks und der Haltekraft aufzunehmen hat.

Bei der aus DE 19 11 600 A bekannten Blasform sind die beiden Formhälften direkt an der Verbindungsachse schwenkgehaltert. In der Formtrennebene sind aufwendige Zentrierflächenanordnungen vorgesehen, um in der Schließstellung einen Versatz zwischen den Formhälften zu vermeiden.

Aus US-A-3 195 186 ist es bekannt, bei einer Spritzgießmaschine ein Paket aus mehreren Formteilen von beiden Querseiten durch U-förmige Schließklammervorrichtungen zu fixieren, die nur an den Randbereichen des Pakets angreifen. Zusätzlich sind senkrecht zu den Formtrennebenen orientierte Zylinder vorgesehen, die zwischen den Schließklammervorrichtungen auf die Ober- und Unterseiten des Pakets drücken. Die Zylinder fügen erst das Paket zusammen, um die Schließstellung einzustellen, ehe die Schließklammervorrichtungen durch eigene Antriebe aufgeschoben werden.

Der Erfindung liegt die Aufgabe zugrunde, eine Blasform und ein Verfahren zum Verstellen der Formhälften einer Blasform bereitzustellen, die ein effektives Formblasen von Vorformlingen oder Glasbehältern ermöglichen, wobei die Blasform mechanisch einfach konstruiert ist und nur einen einfachen Antrieb benötigt.

Die gestellte Aufgabe wird gelöst mit den Merkmalen des Anspruchs 1 und den Verfahrensmerkmalen des Anspruchs 12.

Bevorzugte Ausführungsformen sind in den abhängigen Ansprüchen definiert.

Die Schließklammer ist so ausgestaltet und angeordnet, das sie die Formhälften durch gleitenden bzw. rollenden und drückenden Kontakt zumindest mit Teilen von deren Außenoberflächen um die Verbindungsachse bis in die Schließstellung zueinander schwenkt und dann spaltenfrei gegeneinander drückt. Auf diese Weise wird eine Blasform geschaffen, die mechanisch einfach und platzsparend ist und ein sicheres und festes Verschließen der Formhälften für den Blasprozess ermöglicht. Die Schließklammer hat zumindest eine Doppelfunktion: Sie bringt die Formhälften aus der Öffnungsstellung in die Schließstellung, und sie erzeugt in der Schließstellung die Zuhaltekraft. Da die Schließklammer direkt entlang der Außenwände der Formhälften gleitet und die Formhälften zentrisch gegeneinander drückt, sind zum Aufnehmen von Reaktionskräften keine wenig geeigneten Gelenkverbindungen nötig. Die Schließklammer ist durch die U-förmige Ausgestaltung ihrer Innenfläche auf die Formgebung der Außenoberfläche der Formhälften abgestimmt, die z.B. zylinderschalenförmige Außenoberflächen haben. Somit kann die Schließklammer, die zumindest teilweise in Kontakt mit der Außenoberfläche jeder Formhälfte kommt, die Formhälften dicht und eng anliegend umschließen, um ein festes Zuhalten der Formhälften auch unter hohen Innendrücken in der Blasform sicherzustellen. Für den Schließvorgang und das Zuhalten wird nur ein Antrieb benötigt.

Der Abstand zwischen den freien Schließklammer-Endbereichen sollte im Wesentlichen dem größten Außenmaß der geschlossenen Formhälften entsprechen, damit die Formhälften gleichmäßig gegeneinander gedrückt und die Verbindungsachse entlastet werden.

Da es aufgrund großer Kräfte von einigen Tonnen, die auf die Schließklammer beim Blasprozess wirken können, zu einer starken mechanischen Beanspruchung kommt, kann an einem Bereich der Außenoberfläche zumindest einer der Formhälften, der in der Schließstellung zumindest teilweise in Kontakt mit der Schließklammer ist, eine austauschbare Kontaktwandfläche befestigt sein. Die Kontaktwandfläche kann ein gehärtetes Federstahlblech oder dgl. sein. Ist diese Kontaktwandfläche mechanisch abgenutzt, muss nicht die gesamte Vorrichtung, sondern lediglich die Kontaktwandfläche ersetzt werden.

Um ein möglichst reibungsfreies Gleiten der Schließklammer an den Außenoberflächen der Formhälften beim Schließvorgang zu ermöglichen, kann die Schließklammer mindestens eine drehbar gelagerte Stange oder Rolle umfassen, die beim Schließvorgang in Kontakt mit der Außenoberfläche einer der Formhälften tritt. D.h., mit an beiden freien Enden der U-Form der Innenfläche der Schließklammer drehbar gelagerten Stangen oder Rollen, die sich in etwa parallel zur Hauptachse der beiden Formhälften bzw. zur Verbindungsachse erstrecken, lässt sich die Schließklammer zum Schließen der Formhälften unter Abrollen der Stangen oder Rollen mit verminderter Reibung und geringerem Energieaufwand bewegen.

In der Schließstellung sollte die Schließklammer mit ihren freien, angreifenden Enden auf die Mitte des Formhohlraums oder die Mitte zwischen mehreren Formhohlräumen ausgerichtet sein, um eine möglichst gleichmäßige Kraftverteilung zu erzielen und die Verbindungsachse zu entlasten.

Um die Formhälften nach dem Wegschieben der Schließklammer rasch und automatisch zu öffnen, können die Formhälften mit einem Federelement und einem Mitnehmer mechanisch verbunden sein, deren bzw. dessen Kraft die Formhälften öffnet.

Zweckmäßig wird sogar die Wegschiebebewegung der Schließklammer genutzt, um die Formhälften z.B. über Federelemente und/oder Zuglaschen von der Schließklammer öffnen zu lassen.

Um die mechanische Stabilität der Blasform in der Schließstellung zu erhöhen und, gegebenenfalls, eine grazile und kompakte Schließklammer einzusetzen, kann an zwei gegenüberliegenden Seiten der Formhälften jeweils ein Anschlagelement wie eine Bolzenstange so angebracht sein, dass die Schließklammer zumindest in der Schließstellung zwischen den beiden Anschlagelementen lösbar eingeklemmt ist. Die an gegebenen Positionen angeordneten Stangen oder Anschlagelemente nehmen von der Schließklammer Reaktionskräfte, z.B. vom Innendruck in der Blasform, auf und stützen die Schließklammer ab.

Eine präzise steuerbare, kompakte und funktionssichere Verschiebeeinrichtung für die Schließklammer kann einen Pneumatikzylinder, einen Hydraulikzylinder oder eine kurvengesteuerte Rolle aufweisen. Andere Arten von Aktuatoren sind ebenfalls brauchbar.

Um die Schließklammer in der Schließstellung zwecks optimaler Kraftübertragung möglichst nahe an der geschlossenen Blasform positionieren zu können, ist die Verbindungsachse durch einen Zwischenraum unterbrochen, durch welchen sich die Schließklammer hindurchschieben lässt.

Da die Schließklammer ohnedies zum Öffnen der Formhälften verstellt werden muss, und ihre Antriebseinrichtung entsprechend ausgebildet wird, lässt sich diese Wegschiebebewegung zweckmäßig auch nutzen, um die Schließklammer als Öffnungseinrichtung zum Auseinanderschwenken der Formhälften zu nutzen.

Baulich einfach wird die Schließklammer in die Öffnungseinrichtung integriert, indem sie über beim Zurückziehen der Schließklammer spannbare Federelemente und/oder Zuglaschen mit den Formhälften gekuppelt ist.

Beim Aufschieben der Schließklammer auf die geöffneten Formhälften kommt die Schließklammer zuerst in Kontakt mit Bereichen der Formhälften in der Nähe der Verbindungsachse. Dann gleitet die Schließklammer von der Verbindungsachse weg entlang der Außenoberflächen der Formhälften, bis die Blasform geschlossen und schließlich in der Schließstellung sicher zugehalten wird. Die Schließklammer fungiert universell als Verschlusseinrichtung und als Zuhalteeinrichtung. Gegebenenfalls wird sie sogar als Öffnungseinrichtung eingesetzt, so dass insgesamt nur ein einziger Antrieb für diese verschiedenen Funktionen notwendig ist.

Verfahrensgemäß lässt sich demzufolge die Blasform durch das Zurückziehen der Schließklammer aus der Schließstellung in ihre Öffnungsstellung zwingen. Mit der Mehrfachfunktion der Schließklammer ergeben sich kurze Formschließ- und Öffnungstakte mit verringertem Bauaufwand und einem einzigen Antrieb.

Ausführungsbeispiele des Erfindungsgegenstandes werden anhand der Zeichnung erläutert. Es zeigen:
- Fig. 1: eine Perspektivansicht einer Blasform in der Schließstellung,
- Fig. 2: eine Draufsicht auf eine weitere Ausführungsform einer Blasform in einer Öffnungsstellung,
- Fig. 3: eine Draufsicht der Blasform von Fig. 3 in der Schließstellung,
- Fig. 4: eine Seitenansicht der Blasform der Fig. 3,
- Fig. 5: eine Schemadraufsicht auf eine weitere Ausführungsform einer Blasform in der Öffnungsstellung,
- Fig. 6: eine Draufsicht der Blasform von Fig. 5 in der Schließstellung,
- Fig. 7: eine schematische Draufsicht auf eine weitere Ausführungsform einer Blasform in der Öffnungsstellung,
- Fig. 8: eine Draufsicht der Blasform von Fig. 7 in der Schließstellung,
- Fig. 9: eine schematische Draufsicht auf Blasformen in einer Rundläuferanordnung,
- Fig. 10: eine Draufsicht einer weiteren Ausführungsform einer Blasform in der Schließstellung, und
- Fig. 11: eine Draufsicht auf eine weitere Ausführungsform einer Blasform in der Schließstellung.

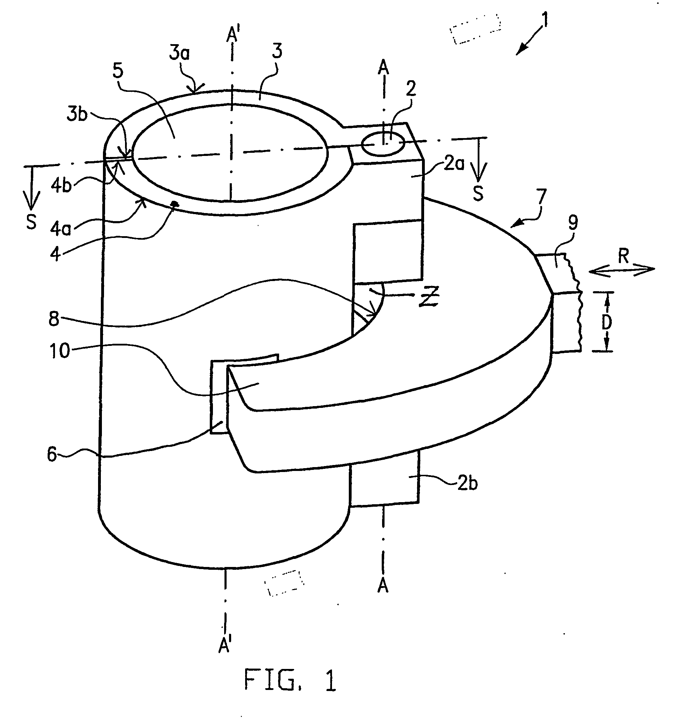

Eine Blasform 1 in Fig. 1, die in einer Streck- oder Glasblasmaschine verwendet wird, umfasst zwei um eine Verbindungsachse 2 schwenkbare Formhälften 3, 4. Die Formhälften 3, 4 sind beispielsweise aus Stahl hergestellt und so ausgestaltet, dass sie in einer Schließstellung wenigstens einen inneren Formhohlraum 5 bilden, in den ein nicht dargestellter Vorformling oder ein Glasbehälter formgeblasen, d.h. z.B. mit 40 bar auskonturiert werden kann.

Die Blasform 1 in Fig. 1 umfasst ferner zusätzlich zu den Formhälften 3, 4 nicht gezeigte Boden- und Deckelformen. Die Formhälften 3, 4 sind hier im Wesentlichen halbzylindrisch. Die Verbindungsachse 2 durchsetzt jeweils Lagerbockelemente 2a, 2b, die entlang der longitudinalen Achse A der Verbindungsachse 2 voneinander beabstandet sind.

Eine als Verschlusseinrichtung und als Zuhalteeinrichtung der Formhälften 3, 4 vorgesehene Schließklammer 7 ist z.B. aus gehärtetem Edelstahl hergestellt und hat etwa die Form einer Mondsichel. Den Formhälften 3, 4 zugewandt weist die Schließklammer 7 eine im Wesentlichen U-förmig gekrümmte Innenfläche 8 auf. Die Schließklammer 7 ist in einer Ebene etwa senkrecht zu der Achse A, A' im Wesentlichen symmetrisch bezüglich einer Symmetrieebene S der Blasform 1. Die Innenfläche 8 der Schließklammer 7 ist so geformt, dass zumindest Bereiche an den beiden freien Enden 10 der U-Form der Schließklammer beim Schließvorgang in direkten Gleit- und Druckkontakt mit Außenoberflächen 3a, 4a der Formhälften 3, 4 treten. Die Schließklammer 7 ist an der Seite der Verbindungsachse 2 verschiebbar angeordnet.

An dem von den Formhälften 3, 4 wegweisenden Ende der Schließklammer 7 ist eine nicht näher dargestellte Verschiebeeinrichtung vorgesehen, die über eine Schiebstan-Schiebstange 9 z.B. mit einem Pneumatikzylinder auf die Schließklammer einwirkt. Die Verschiebeeinrichtung ist so ausgebildet, dass der Pneumatikzylinder, z. B. 50 mm Hubweg, Beaufschlagungsdruck 100 bar, in der Richtung R senkrecht zu den Achsen A, A' arbeitet.

In Fig. 1 ist die Schließstellung der Blasform 1 gezeigt. Die Schließklammer 7 ist so weit in Richtung R auf die Formhälften 3, 4 aufgeschoben, dass die Formhälften zwischen den freien Enden 10 eingeklemmt und vollständig geschlossen sind. Formtrennflächen 3b, 4b der Formhälften 3, 4 liegen dicht und spaltfrei aneinander an. Der Abstand zwischen den freien Enden 10 der Schließklammer 7 ist so gewählt, dass er im Wesentlichen dem Außenmaß der geschlossenen Formhälften 3, 4 entspricht. Die Enden 10 greifen im Wesentlichen ausgerichtet auf die Mitte des Formhohlraums 5 an den Außenoberflächen an. Ein Endbereich 10 der Schließklammer 7 kann eine Breite von etwa 50 bis 100 mm und eine Dicke D von mindestens 100 mm, z.B. sogar von 180 mm, haben:

Um die Schließklammer 7 stabil ausgestalten und möglichst nahe an die Formhälften 3, 4 bringen zu können, ist die erwähnte Konstruktion der Verbindungsachse 2 zweckmäßig, wobei die Lagerbockelemente 2a, 2b voneinander beabstandet sind und in Richtung der Achse A einen Zwischenraum Z freilassen. Weil die Verbindungsachse 2 keine durchgehende Welle aufweist, sondern sozusagen ausgespart ist, kann die in der Schließstellung nach Fig. 1 in den Zwischenraum Z eingeschobene Schließklammer 7 dort eine Dicke D haben, deren Maximalwert nur durch den freien Abstand im Zwischenraum Z beschränkt ist.

An zwei gegenüberliegenden Stellen der Außenoberflächen 3a, 4a der Formhälften 3, 4 sind austauschbare Kontaktwandflächen 6 befestigt, z.B. Kontaktbleche. Die Kontaktbleche sind so angebracht, dass die freien Enden 10 der Schließklammer 7 in der Schließstellung die beiden Formhälften 3, 4 gerade dort einklemmen. Die Kontaktwandflächen 6 können z.B. aus einem gehärteten Federstahlblech von einigen Millimetem Dicke bestehen, das in eine nicht dargestellte Vertiefung so eingesetzt ist, das seine Position fixiert ist, es bei Bedarf jedoch ausgetauscht werden kann.

Alternativ oder zusätzlich könnten auch die freien Enden 10 der Schließklammer 7 austauschbare Wandflächen, z.B. gehärtete Formstahlbleche, aufweisen, die bei Verschleiß ausgetauscht werden.

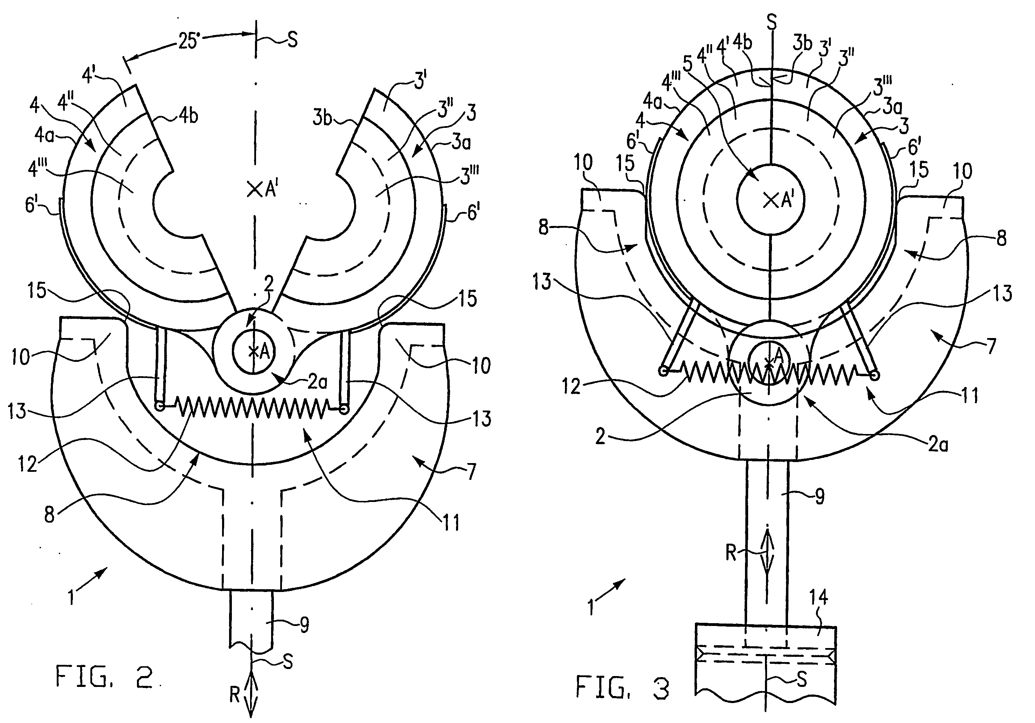

Ein zweites Ausführungsbeispiel einer Blasform 1 ist in den Fig. 2 bis 4 dargestellt, wobei der Aufbau dem der ersten Ausführungsform entspricht. Unterschiedlich ist, dass an den Außenoberflächen 3a, 4a der Formhälften 3, 4 befestigte Kontaktbleche 6' sich weiter in Richtung zur Verbindungsachse 2 erstrecken. Die Reibungseinflüsse zwischen der Schließklammer 7 und den Formhälften 3, 4 führen lediglich zum Verschleiß der Kontaktbleche 6'.

Weiterhin ist ein Federelement 11 vorgesehen, um die beiden Formhälften selbsttätig zu öffnen, wenn sich die Schließklammer 7 entfernt. Das Federelement 11 umfasst wenigstens eine Feder 12, die zwischen Befestigungsstangen 13 an den Formhälften 3, 4 gespannt ist. Die Federkraft der Feder 12 zieht die beiden Formhälften 3, 4 ohne eigenen Antrieb um die Verbindungsachse 2 nach außen in die geöffnete Stellung.

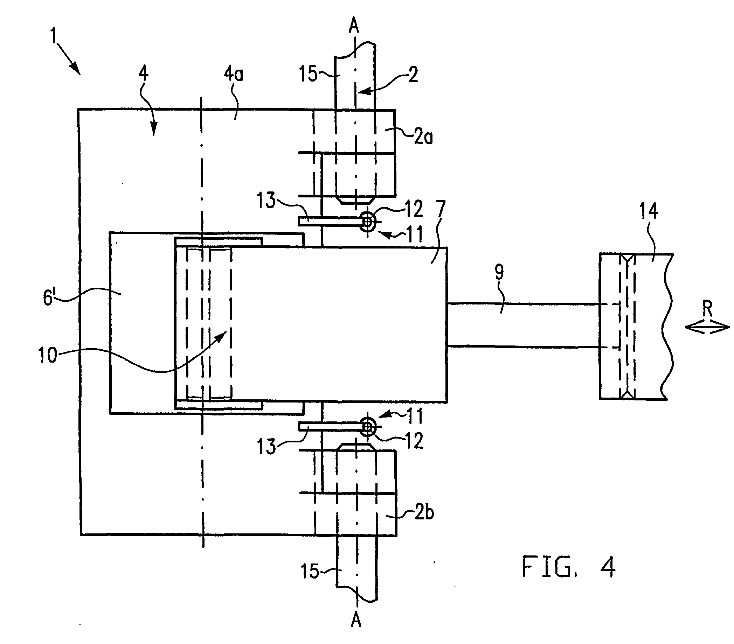

Aus Stabilitätsgründen sind beispielsweise zwei Federelemente 11 vorgesehen. Die Lagerbockelemente 2a, 2b sind an dem oberen und unteren Ende der Verbindungsachse 2 jeweils auf einem Wellenstift 15 gelagert (Fig. 4), der an einem nicht dargestellten Bestandteil der Blasform befestigt ist In den Fig. 3 und 4 ist an der Verschiebstange 9 der Verschiebeeinrichtung ein Pneumatikzylinder 14 angedeutet. Die Formhälften 3, 4 haben in dieser Ausführungsform jeweils einen dreiteiligen Aufbau. Sie bestehen aus einer äußeren Schale 3', 4', einer inneren Gebindeform 3"', 4"', und einer zwischen Schale und Gebindeform eingebrachten Mutterform 3". Die Muttertorm 3" kann mit nicht dargestellten Kühl-/Heizbohrungen versehen sein, um die Gebindeform 3"', 4'" zu kühlen bzw. zu heizen. Wird keine Mutterform verwendet, könnten Kühl-/Heizbohrungen alternativ in der Schale 3', 4' vorgesehen sein.

Wichtig ist, dass die Formtrennflächen 3b, 4b zur Begrenzung des Formhohlraums 5 spaltenfrei gegeneinander gedrückt werden. Alternativ wäre es denkbar, die Formtrennflächen 3b, 4b nur im Bereich der Gebindeform 3"', 4'" spaltenfrei gegeneinander zu drücken, so dass in der Schließstellung zwischen den Formtrennflächen 3b, 4b im Bereich der Schalen 3', 4' und/oder der Mutterformen 3", 4" Spalte verbleiben könnten.

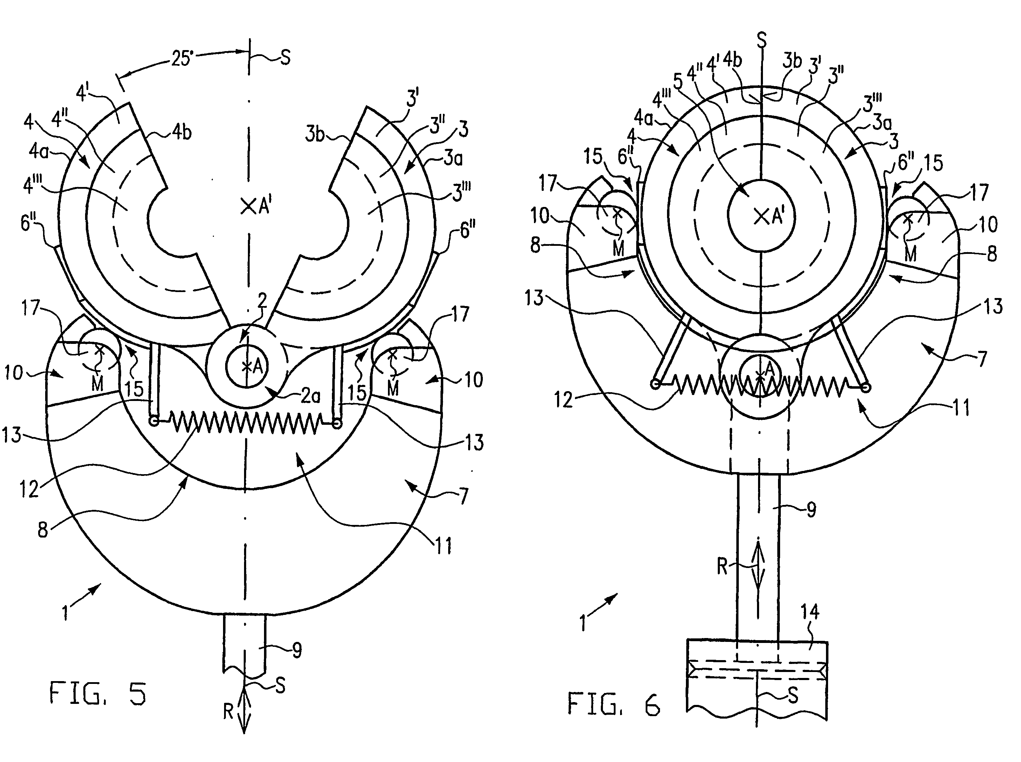

Ein drittes Ausführungsbeispiel einer erfindungsgemäßen Blasform 1 ist in den Fig. 5 und 6 veranschaulicht. Diese Blasform 1 unterscheidet sich vom Ausführungsbeispiel nach den Fig. 2 bis 4 dadurch, dass in jedem freien Ende 10 der Schließklammer 7, z.B. in einer Ausnehmung, eine Drehstange oder Rolle 17 drehbar gelagert ist, die sich parallel zur Achse A der Blasform 1 erstreckt. Die Drehstangen 17 sind in der Schließklammer 7 um ihre Achsen M drehbar gelagert und auf beiden Seiten der Symmetrieebene S angeordnet, so dass sie beim Schließvorgang in direktem Kontakt mit den Außenoberflächen der Formhälften bzw. dort vorgesehenen Kontaktblechen 6" kommen.

Die Kontaktbleche 6" besitzen in von der Verbindungsachse 2 femliegenden Bereichen, in denen die Drehstangen sitzen in der Schließstellung (Fig. 6) anliegen, Abflachungen, um eine Art Übertotpunkt oder Rastverriegelung zu erzeugen.

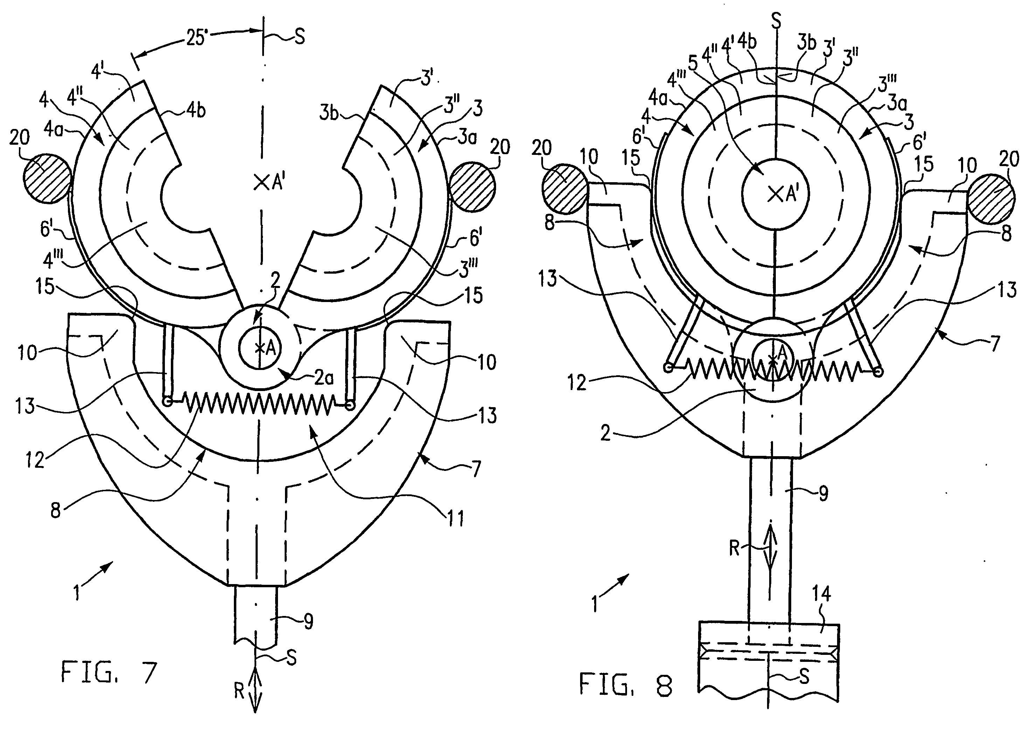

Das weitere Ausführungsbeispiel der Fig. 7 und 8 entspricht im Wesentlichen dem der Fig. 2 bis 4. Allerdings sind zu beiden Seiten der Blasformhälften 3, 4 zur Achse A' parallele, hier zylinderförmige bzw. stangenförmige Anschlagelemente 20 aus Stahl platziert. Diese sind positionsfest an nicht dargestellten Stützelementen befestigt.

Gemäß Fig. 8 ist der gegenseitige Abstand der Anschlagelemente 20 so gewählt, dass in der Schließstellung der Blasform 1 die freien Enden 10 der Schließklammer 7 jeweils zwischen einem Anschlagelement 20 und der jeweiligen Außenoberfläche 3a, 4a der Formhälfte 3, 4 eingeklemmt ist und die Anschlagelemente 20 auch einen großen Teil der auftretenden Kräfte auffangen, die z.B. durch den beim Blasprozess erzeugten Innendruck im Hohlraum 5 auf die Formhälften 3, 4 und die Schließklammer 7 wirken. Folglich können die Abmessungen der Schließklammer 7 trotz dieser hohen Kräfte verkleinert werden, so dass die gesamte Anordnung platzsparend ist.

In Fig. 7 liegen die Formhälften 3, 4 in der geöffneten Stellung mit ihren Außenoberflächen 3a, 4a an den Anschlagelementen 20 an. Dadurch ist der maximale Öffnungswinkel definiert. Das Federelement 11 lässt sich so dimensionieren, dass die Feder 12 in Fig. 7, d.h. im geöffneten Zustand der Blasform, zumindest im Wesentlichen entspannt ist.

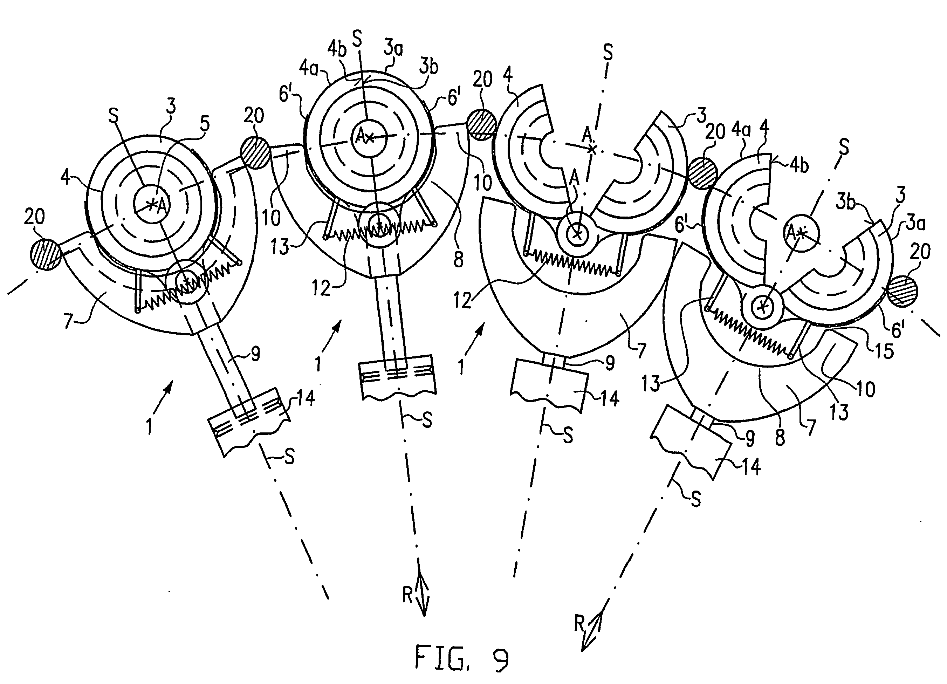

In Fig. 9 ist eine Rundläuferanordnung mit mehreren Blasformen 1 schematisch dargestellt. Vier Blasformen 1 der in den Fig. 7 und 8 dargestellten Ausführungsform sind entlang eines Kreisbogens nebeneinander angeordnet Die beiden linken Blasformen 1 sind in der Schließstellung analog zur Fig. 8 und die beiden rechten Blasformen 1 in der geöffneten Stellung analog zur Fig. 7 gezeigt Ein Anschlagelement 20 ist somit je zwei Blasformen 1 zugeordnet, so dass sich die entgegengesetzten Reaktionskräfte zweiter geschlossener Blasformen 1 im Wesentlichen am Anschlagelement 20 aufheben. Diese Anordnung ist mechanisch besonders stabil und sehr raumsparend.

Eine Anordnung mit je einem Anschlagelement 20 zwischen zwei Blasformen ist nicht nur bei einer Rundläuferanordnung zweckmäßig, sondern auch bei einer Geradläuferanordnung, bei der die Blasformen entlang einer Linie aufgereiht sind.

Das erfindungsgemäße Verfahren wird anhand der Fig. 2 bis 4 für einen Streckblasvorgang beschrieben, obwohl ein ähnlicher Operationsablauf auch für die Vorgänge in einer Glasblasmaschine Gültigkeit hat. Vor einem Streckblasvorgang befindet sich die Blasform 1 in der in Fig. 2 gezeigten geöffneten Stellung. Die Formhälften 3, 4 sind z.B. um 25° relativ zur Symmetrieebene S aufgeschwenkt Die Schließklammer 7 ist in der Richtung R so weit von den Formhälften 3, 4 wegverschoben, dass sie keinen Kontakt mit einer Außenoberfläche 3a, 4a hat. Alternativ könnten allerdings die freien Enden 10 der Schließklammer 7 den maximalen Öffnungswinkel der Formhälften 3, 4 durch Kontakt mit den Kontaktflächen 6, 6' definieren. In Fig. 2 halten zunächst die Federn 12 die Formhälften 3, 4 in der geöffneten Stellung. Nun wird ein Vorformling in den Formhohlraum 5 eingebracht und werden die Formhälften 3, 4 in die Schließstellung gemäß Fig. 2 gebracht. Mittels des Pneumatikzylinders 14 wird die Schließklammer 7 verstellt, bis sie mit Bereichen 15 an den freien Enden 10 die Außenoberflächen 3a, 4a in der Nähe der Verbindungsachse 2 kontaktiert In den Fig. 2 bis 4 werden hierbei z.B. die Kontaktfläche 6' kontaktiert. Mittels des Pneumatikzylinders 14 werden die Formhälften 3, 4 um die Verbindungsachse 2 gegen die Kraft der Feder 12 aufeinaufeinander zu in die Schließstellung geschwenkt. In der in Fig. 3 dargestellten Schließstellung liegen die Formtrennflächen 3b, 4b dicht bzw. spaltfrei aneinander an. Beim Schließvorgang gleitet die Schließklammer 7 entlang der Außenoberflächen 3a, 4a von der Seite der Verbindungsachse 2 bis in die in Fig. 3 dargestellte Position. Der Abstand der freien Enden 10 ist so gewählt, dass er im Wesentlichen dem Außenmaß der Formhälften 3, 4 in der Schließstellung entspricht, bzw. dass die Schließklammer 7 die erforderliche Zuhaltekraft erzeugt. In der Schließstellung werden die nicht dargestellten Deckel- und Bodenformen mit den Formhälften 3, 4 zusammengeführt und nachfolgend in der geschlossenen Blasform 1 zum Streckblasen ein Blasdruck von z.B. bis zu 40 bar erzeugt und der Vorformling auskonturiert.

Aufgrund der Funktion der Schließklammer als Verschluss- und Zuhalteeinrichtung der erfindungsgemäßen Blasform ist sichergestellt, dass selbst bei hohen Innendrücken im Formhohlraum 5 die notwendige Zuhaltekraft wirkt, und zwar ohne zusätzliche Verriegelungseinrichtungen.

Nach Durchführen des Streckblasprozesses wird die Blasform 1 geöffnet, indem der Pneumatikzylinder 14 umgekehrt angetrieben und die Schließklammer 7 in der Richtung R von den Formhälften 3, 4 weggezogen und die gespannte Feder 12 die Formhälften 3, 4 um die Verbindungsachse 2 nach außen schwenkt.

Die erfindungsgemäße Blasform und das erfindungsgemäße Verfahren ermöglichen es, die Blasform durch eine mechanisch einfache und platzsparende Konstruktion sicher zu schließen und in der Schließstellung zuzuhalten, ohne dass eine weitere Verriegelungseinrichtung notwendig wäre.

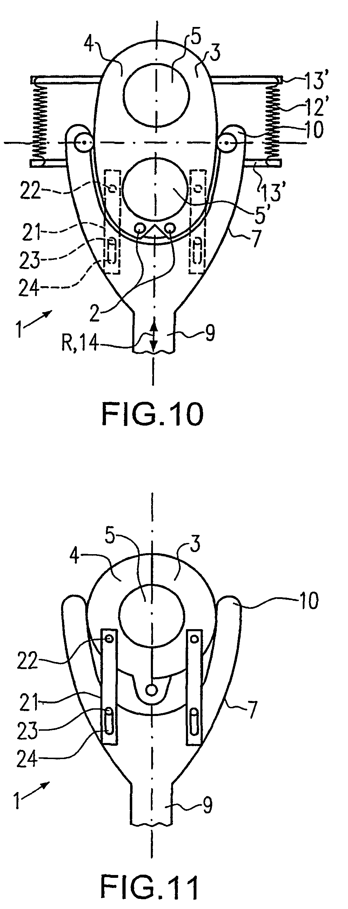

In der weiteren Ausführungsform der Blasform 1 in Fig. 10 wird die Schließklammer 7 auch als Öffnungseinrichtung benutzt. Über in der dargestellten Schließstellung weitgehend entspannte Zugfedern 12', die an Verankerungsstäben 13' der Formhälften 3, 4 und der Schließklammer 7 befestigt sind, werden die Formhälften 3, 4 beim Zurückziehen der Schließklammer 7 in die geöffnete Stellung um die bei dieser Ausführungsform zweiteilige Verbindungsachse 2 auseinandergeschwenkt, wobei die Öffnungsstellung durch den Kontakt mit den freien Enden 10 der Schließklammer 7 definiert sein kann. Als Option können ferner Laschen 21 vorgesehen sein, die für jede Formhälfte 3, 4 an Verankerungen 22, 23 angelenkt sind, und die die Formhälften 3, 4 zwangsweise in Richtung auf die Öffnungsstellung verstellen, sobald sich die Schließklammer 7 aus der Schließstellung bewegt. Zu Fig. 10 ist anzumerken, dass selbstverständlich die beiden Formhälften 3, 4 miteinander mehr als einen Formhohlraum 5, 5' begrenzen können. Die freien Enden 10 der Schließklammer 7 sollten in der Schließstellung dann ziemlich genau in der Mitte zwischen den beiden Formhohlräumen 5, 5' angreifen. Es können sogar mehr als zwei Formhohlräume 5, 5' vorgesehen sein.

In der Ausführungsform der Fig. 10 kann als Öffnungseinrichtung die Bestückung mit den Zugfedern 12' ausreichen. Sicherheitshalber können zusätzlich die Zuglaschen 21 vorgesehen sein. Damit die Zuglaschen 21 in der Schließstellung keinen unerwünschten Einfluss ausüben, ist es zweckmäßig, sie mit einem Spiel über Langlöcher 24 so zu lagem, dass die Schließklammer 7 zunächst einen bestimmten Hub aus der Schließstellung durchfährt, ehe die Zuglaschen 21 ihre zwangsweise Wirkung entfalten. Alternativ wäre es denkbar, die Zugfedern 12' wegzulassen, und die Formhälften 3, 4 nur mit den Zuglaschen 21 zwangsweise zu öffnen, so wie dies in Fig. 11 bei einer weiteren Ausführungsform einer Blasform 1 angedeutet ist.

Bei der Blasform 1 in Fig. 11 erfolgt das Öffnen der beiden Formhälften 3, 4 ausschließlich durch die Zuglaschen 21, die beispielsweise an Stiften 22, 23 an den Formhälften 3, 4 und an der Schließklammer 7 angelenkt sind, wobei Langlöcher 24 einen Leerhub bewirken, dank dessen die Zuglaschen 21 das ordnungsgemäße Zuhalten in der Schließstellung nicht beeinträchtigen und beim Wegziehen der Schließklammer 7 erst nach einem bestimmten Bewegungshub der Schließklammer zu wirken beginnen.

## Patentansprüche

1. Blasform (1), insbesondere für eine Streckblasmaschine, mit zwei Formhälften (3, 4), die zur Bildung eines durch Innenwandungen der Formhälften begrenzten inneren Hohlraums (5) um eine Verbindungsachse (2) zueinander schwenkbar sind, mit einer Verschlusseinrichtung zum Zueinanderschwenken der Formhälften zu einer Schließstellung, und mit einer durch eine Verschiebeeinrichtung (9, 14) zu einer Verschiebebewegung antreibbaren, eine in etwa U-förmige Innenfläche (8) aufweisenden Schließklammer (7) mit freien Schließklammer-Endbereichen (10), die die Formhälften in der Schließstellung spaltenfrei zusammendrückt, wobei die beiden Formhälften (3, 4) miteinander durch die Verbindungsachse (2) verbunden sind, die Schließklammer (7) an der der Verbindungsachse (2) zugewandten Seite der Formhälfte angeordnet und von der Seite der Verbindungsachse (2) über die Formhälften (3, 4) schiebbar ist, und die Schließklammer zumindest Teil der Verschlusseinrichtung und einer Zuhalteeinrichtung für die Formhälften ist, **dadurch gekennzeichnet, dass** die freien Endbereiche (10) der Schließklammer (7) beim Zueinanderschwenken der Formhälften (3, 4) direkt in gleitenden bzw. rollenden und drückenden Kontakt mit den Außenseiten der Formhälften bringbar sind und in der Schließstellung mit Druckkontakt direkt auf den Außenseiten aufliegen.

2. Blasform nach Anspruch 1, **dadurch gekennzeichnet, dass** der Abstand zwischen den freien Schließklammer-Endbereichen (10) im Wesentlichen dem Außenmaß der Formhälften (3, 4) in der Schließstellung entspricht.

3. Blasform nach Anspruch 1, **dadurch gekennzeichnet, dass** die Außenoberflächen beider Formhälften (3, 4) Gleit- und/oder Druck-Kontaktwandflächen (6, 6', 6") für die Schließklammer (7) aufweisen, vorzugsweise austauschbare Kontaktwandflächen oder Kontaktflächen.

4. Blasform nach Anspruch 1, **dadurch gekennzeichnet, dass** die in etwa U-förmige Innenfläche (8) der Schließklammer (7) in den die Formhälften-Außenoberflächen kontaktierenden Endbereichen (10) eine drehbar gelagerte Stange oder Rolle (17) pro Formhälfte aufweist.

5. Blasform nach Anspruch 1, **dadurch gekennzeichnet, dass** die Schließklammer (7) in der Schließstellung mit ihren die Außenoberflächen der Formhälften (3, 4) kontaktierenden freien Endbereichen (10) zumindest in etwa auf die Mitte des Formhohlraums (5) bzw. die Mitte zwischen mehreren Formhohlräumen (5, 5') ausgerichtet ist.

6. Blasform nach Anspruch 1, **dadurch gekennzeichnet, dass** die Formhälften (3, 4) mit einem Federelement (11) oder einem Mitnehmer mechanisch verbunden sind, und dass die Federkraft des Federelements (11) oder die Kraft des Mitnehmers in Öffnungsrichtung um die Verbindungsachse (2) an den Formhälften (3, 4) angreift.

7. Blasform nach wenigstens einem der vorhergehenden Ansprüche, **dadurch gekennzeichnet, dass** an zwei in Öffnungsschwenkrichtung um die Verbindungsachse (2) gegenüberliegenden Seiten der Formhälften (3, 4) stationäre Anschlagelemente (20) angebracht sind, zwischen denen in der Schließstellung die Schließklammer (7) lösbar eingeklemmt ist.

8. Blasform nach Anspruch 1, **dadurch gekennzeichnet, dass** die Verschiebeeinrichtung (9, 14) der Schließklammer (7) einen Pneumatikzylinder (14), einen Hydraulikzylinder oder eine kurvengesteuerte Rolle aufweist.

9. Blasform nach wenigstens einem der vorhergehenden Ansprüche, **dadurch gekennzeichnet, dass** die Verbindungsachse (2) aus zwei gleichachsigen und axial beabstandeten Wellenstiften (15) besteht, an denen die Formhälften (3, 4) jeweils mit Lagerbockelementen (2a, 2b) gelagert sind, und dass die Lagerbockelemente (2a, 2b) zwischen den Wellenstiften (15) in Richtung der Verbindungsachse (2) einen Zwischenraum zum Aufschieben der Schließklammer (7) auf die Formhälften (3, 4) begrenzen.

10. Blasform nach Anspruch 1, **dadurch gekennzeichnet, dass** die Schließklammer (7) als eine Öffnungseinrichtung zum Auseinanderschwenken der Formhälften (3, 4) ausgebildet ist.

11. Blasform nach Anspruch 10, **dadurch gekennzeichnet, dass** die Schließklammer (7) über bei der Rückzugsbewegung aus der Schließstellung spannbare Federelemente (12') und/oder Zuglaschen (21) mit den Formhälften (3, 4) gekuppelt ist.

12. Verfahren zum Verstellen zweier um wenigstens eine Verbindungsachse (2) schwenkbarer Formhälften (3, 4) einer Blasform, insbesondere in einer Streck- oder Glasblasmaschine, bei dem die in ihrer Schließstellung wenigstens einen Formhohlraum (5, 5') begrenzenden Formhälften (3, 4) mittels einer U-förmigen Schließklammer (7) in eine Schließstellung zueinander geschwenkt und in der Schließstellung durch die von der Seite der Verbindungsachse (2) in eine Eingriffsstellung verschobene Schließklammer (7) gegeneinander gedrückt werden, **dadurch gekennzeichnet, dass** die beiden Formhälften (3, 4) durch direkten gleitenden bzw. rollenden und drückenden Kontakt der freien Endbereiche (10) der Schließklammer (7) sowohl in die Schließstellung geschwenkt als auch in der Schließstellung gegeneinander gedrückt werden.

13. Verfahren nach Anspruch 12, **dadurch gekennzeichnet, dass** die Formhälften (3, 4) aus der Schließstellung durch Verschieben der mit den Formhälften (3, 4) gekoppelten Schließklammer (7) über die Schließklammer (7) in ihre Öffnungsstellung gezwungen werden.

## Claims

1. Blow mould (1), in particular for a stretching blow machine, comprising two mould halves (3, 4) which can be pivoted to each other about a connection axis (2) for forming at least one mould cavity (5) defined by inner walls of the mould halves, a closing device for pivoting the mould halves to each other into a closed position, and a closing clamp (7) having an essentially U-shaped inner surface (8) and free closing clamp end portions (10) and being adapted to be driven for a pushing movement by a pushing device (9, 14) for pressing the mould halves against each other without gaps into the closed position, both mould halves (3, 4) being connected with each other by the connection axis (2), the closing clamp (7) being arranged at the side of the mould halves facing the connection axis (2) and being pushable over the mould halves (3, 4) from the side of the connection axis (2), the closing clamp constituting at least part of the closing device and of a device for holding the form halves closed, **characterised in that that** the free end portions (10) of the closing clamp (7) can be brought directly in sliding or rolling and pressing contact with the outer sides of the form halves when pivoting the form halves (3, 4) to each other, and that the free end portions (10) directly abut with pressing contact on the outer sides in the closed position.

2. Blow mould as in claim 1, **characterised in that** the distance between the free end portions (10) of the closing clamp substantially corresponds to the outer dimension of the form halves (3, 4) when being in the closed position.

3. Blow mould as in claims 1, **characterised in that** outer surfaces of both mould halves (3, 4) are provided with slide and/or pressure contact wall surfaces (6, 6', 6") for the closing clamp (7), preferably with replaceable contact wall surfaces or contact surfaces.

4. Blow mould as in claim 1, **characterised in that** the substantially U-shaped inner surface (8) of the closing clamp (7) is provided at the end portions (10) contacting the outer surface of the mould halve with a respective rotatably supported rod or a roller (17) per mould halve.

5. Blow mould as in claim 1, **characterised in that** in the closed position the closing clamp (7) free end portions (10) contacting the outer surfaces of the mould halves (3, 4) are aligned at least substantially towards the centre of the mould cavity (5) or towards the middle between several mould cavities (5, 5'), respectively.

6. Blow mould as in claim 1, **characterised in that** the mould halves (3, 4) are mechanically connected to a spring element (11) and/or to a driver, respectively, and that the spring force of the spring element (11) or the force of the driver, respectively, is acting at the mould halves (3, 4) in opening direction about the connection axis (2).

7. Blow mould as in at least one of the preceding claims, **characterised in that** stationary abutment elements (20) are provided in opening pivoting direction about the connection axis (2) at opposed sides of the mould halves (3, 4), and that the closing clamp (7) in the closed position is releasably clamped between the abutment elements (20).

8. Blow mould as in claim 1, **characterised in that** the pushing device (9, 14) of the closing clamp (7) is provided with a pneumatic cylinder (14), a hydraulic cylinder or a cam controlled roller.

9. Blow mould as in at least one of the preceding claims, **characterised in that** the connection axis (2) consists of two coaxial and axially spaced apart stub shafts (15) at which the mould halves (3, 4) respectively are supported by bearing block elements (2a, 2b), and that in the direction of the connection axis (2) the bearing block elements (2a, 2b) define an intermediate space (Z) between the stub shafts (15) allowing to push the closing clamp (7) over the mould halves (3, 4).

10. Blow mould as in claim 1, **characterised in that** the closing clamp (7) is formed as an opening device for pivoting apart the mould halves (3, 4).

11. Blow mould as in claim 10, **characterised in that** the closing clamp (7) is coupled with the mould halves (3, 4) via spring elements (12') and/or pulling links (21), respectively, and that the spring elements (12') are stretched during the pulling back movement of the closing clamp (7) away from the closed position.

12. Method for adjusting two mould halves (3, 4) of a blow mould which are to be pivoted about at least one connection axis (2), particularly in a stretching blow machine or a glass blowing machine, respectively, according to which method the mould halves are pivoted to each other by means of a U-shaped closing clamp (7) into a closed position in which both mould halves define at least one mould cavity (5, 5'), both mould halves being pressed against each other in the closed position by the closing clamp (7) which is pushed from the side of the connection axis (2) into an engagement position, **characterised in that** both form halves (3, 4) are pivoted into the closed position and are pressed against each other also in the closed position by direct sliding or rolling and pressing contact of free end portions (10) of the closing clamp (7).

13. Method as in claim 12, **characterised in that** the mould halves (3, 4) are forced out of the closed position into the opened position via the closing clamp (7) by pulling away the closing clamp (7) which is coupled to the mould halves (3, 4).

## Revendications

1. Moule de soufflage (1), en particulier pour une machine de soufflage-étirage, comprenant deux moitiés de moule (3, 4) qui peuvent pivoter l'une par rapport à l'autre autour d'un axe d'assemblage (2) pour former une cavité intérieure (5) limitée par des parois intérieures des moitiés de moule, un dispositif de fermeture pour le pivotement mutuel des moitiés de moule dans une position de fermeture, et une crampe (7) entraînable par un dispositif de déplacement (9, 14) en un mouvement de déplacement, qui présente une surface intérieure (8) à peu près en U avec des zones extrêmes libres (10) et presse l'une contre l'autre sans interstice les moitiés de moule dans la position de fermeture, les deux moitiés de moule (3, 4) étant assemblées entre elles par l'axe d'assemblage (2), la crampe (7) étant disposée sur le côté de la moitié de moule tourné vers l'axe d'assemblage (2) et pouvant être poussée sur les moitiés de moule (3, 4) à partir du côté de l'axe d'assemblage (2), et la crampe faisant au moins partie du dispositif de fermeture et d'un dispositif de verrouillage pour les moitiés de moule, **caractérisé en ce que** les zones extrêmes libres (10) de la crampe (7), lors du pivotement l'une vers l'autre des moitiés de moule (3, 4), peuvent être amenées directement en contact glissant ou roulant et de pression avec les côtés extérieurs des moitiés de moule et s'appliquent dans la position de fermeture directement sur les côtés extérieurs par contact de pression.

2. Moule de soufflage suivant la revendication 1, **caractérisé en ce que** la distance entre les zones extrêmes libres (10) de la crampe correspond essentiellement à la dimension extérieure des moitiés de moule (3, 4) dans la position de fermeture.

3. Moule de soufflage suivant la revendication 1, **caractérisé en ce que** les surfaces extérieures des deux moitiés de moule (3, 4) présentent des surface de paroi de contact glissant et/ou de pression (6, 6', 6") pour la crampe (7), de préférence des surfaces de paroi de contact ou surfaces de contact interchangeables.

4. Moule de soufflage suivant la revendication 1, **caractérisé en ce que** la surface intérieure (8) à peu près en U de la crampe (7) présente une barre ou rouleau (17) monté tournant par moitié de moule dans les zones extrêmes (10) au contact des surfaces extérieures des moitiés de moule.

5. Moule de soufflage suivant la revendication 1, **caractérisé en ce que** la crampe (7), dans la position de fermeture, est orientée par ses zones extrêmes (10) libres au contact des surfaces extérieures des moitiés de moule (3, 4) au moins à peu près sur le centre de la cavité du moule (5) ou le centre entre plusieurs cavités de moule (5, 5').

6. Moule de soufflage suivant la revendication 1, **caractérisé en ce que** les moitiés de moule (3, 4) sont reliées mécaniquement à un élément à ressort (11) ou à un entraîneur, et que la force de l'élément à ressort (11) ou la force de l'entraîneur agit sur les moitiés de moule (3, 4) dans la direction d'ouverture autour de l'axe d'assemblage (2).

7. Moule de soufflage suivant l'une au moins des revendications précédentes, **caractérisé en ce que** des éléments de butée stationnaires (20), entre lesquels est coincée la crampe (7) de façon amovible dans la position de fermeture, sont montés sur deux côtés des moitiés de moule (3, 4) opposés dans la direction de pivotement d'ouverture autour de l'axe d'assemblage (2).

8. Moule de soufflage suivant la revendication 1, **caractérisé en ce que** le dispositif de déplacement (9, 14) de la crampe (7) présente un cylindre pneumatique (14), un cylindre hydraulique ou un rouleau commandé par came.

9. Moule de soufflage suivant l'une au moins des revendications précédentes, **caractérisé en ce que** l'axe d'assemblage (2) est constitué de deux broches d'arbre (15) de même axe et distantes dans la direction axiale, sur lesquelles sont montées les moitiés de moule (3, 4) par des éléments de support de palier (2a, 2b) respectifs, et que les éléments de support de palier (2a, 2b) délimitent entre les broches (15) en direction de l'axe d'assemblage (2) un espace intermédiaire pour pousser la crampe (7) sur les moitiés de moule (3, 4).

10. Moule de soufflage suivant la revendication 1, **caractérisé en ce que** la crampe (7) est configurée sous forme d'un dispositif d'ouverture pour le pivotement des moitiés de moule (3, 4) à l'écart l'une de l'autre.

11. Moule de soufflage suivant la revendication 10, **caractérisé en ce que** la crampe (7) est accouplée avec les moitiés de moule (3, 4) par l'intermédiaire d'éléments à ressort (12') et/ou d'éclisses de traction (21) tendus lors du mouvement de recul hors de la position de fermeture.

12. Procédé de réglage de deux moitiés (3, 4) d'un moule de soufflage pivotantes autour d'au moins un axe d'assemblage (2), en particulier d'une machine d'étirage ou de soufflage de verre, dans lequel les moitiés de moule (3, 4) limitant dans leur position de fermeture au moins une cavité de moule (5, 5') pivotent l'une vers l'autre dans une position de fermeture au moyen d'une crampe en U (7) et sont pressées l'une contre l'autre dans la position de fermeture par la crampe (7) déplacée dans une position de prise à partir du côté de l'axe d'assemblage (2), **caractérisé en ce que** les deux moitiés de moule (3, 4) pivotent aussi bien dans la position de fermeture que sont pressées l'une contre l'autre dans cette position par contact direct glissant ou roulant et de pression des zones extrêmes libres (10) de la crampe (7).

13. Procédé suivant la revendication 12, **caractérisé en ce que** les moitiés de moule (3, 4) sont contraintes de la position de fermeture dans leur position d'ouverture par l'intermédiaire de la crampe (7), par déplacement de cette dernière accouplée avec les moitiés de moule (3, 4).
